# EUROPÄISCHE PATENTSCHRIFT

(11) **EP 3 577 167 B1**
(45) Veröffentlichungstag und Bekanntmachung des Hinweises auf die Patenterteilung: **23.06.2021**
(21) Anmeldenummer: 18702446.8
(22) Anmeldetag: 24.01.2018
(51) Int. Cl.: C08L 23/16, B29C 65/20, B29C 65/00, C08K 3/06

(54) **WERKSTOFFMISCHUNG FÜR EIN DICHTUNGSPROFIL**
MATERIAL MIXTURE FOR A SEALING PART
MÉLANGE DE MATÉRIAUX POUR UN PROFILÉ D'ÉTANCHÉITÉ

(30) Priorität: 31.01.2017 DE 102017101817
(43) Veröffentlichungstag der Anmeldung: 11.12.2019
(73) Patentinhaber: Semperit AG Holding, 1031 Wien (AT)
(72) Erfinder: LEDZINSKI, Janusz, 57-320 Polanica Zdrój (PL); HOLZNER, Armin, 2630 Ternitz (AT); SUPPLIT, Ralf, 2700 Wiener Neustadt (AT)
(74) Vertreter: Müller Schupfner & Partner Patent- und Rechtsanwaltspartnerschaft mbB
(86) Internationale Anmeldenummer: PCT/EP2018/051621
(87) Internationale Veröffentlichungsnummer: WO 2018/141592

(56) Entgegenhaltungen:
- EP-A1- 0 593 859
- EP-A1- 1 033 386
- EP-A1- 2 805 807
- WO-A1-2008/094741
- WO-A1-2013/131207
- WO-A1-2014/081297
- KRUZELÁK JÁN ET AL: "Sulphur and peroxide vulcanisation of rubber compounds - overview", CHEMICK ZVESTI - CHEMICAL PAPERS, VEDA, BRATISLAVA, SK, vol. 70, no. 12, 28 December 2016 (2016-12-28), pages 1533-1555, XP036137415, ISSN: 0366-6352, DOI: 10.1515/CHEMPAP-2016-0093 [retrieved on 2016-12-28]
- Kinsuk Naskar: "Dynamically vulcanized PP/EPDM thermoplastic elastomers: exploring novel routes for crosslinking with peroxides", , 11 June 2004 (2004-06-11), XP055762345, Retrieved from the Internet: URL:https://ris.utwente.nl/ws/files/607131 3/thesis_Naskar.pdf
- Akzo Nobel: "Crosslinking elastomers and thermoplastics - organic peroxides and auxiliaries", , 1 January 2010 (2010-01-01), Retrieved from the Internet: URL:http://www.synergistixindia.com/Crossl inking_elastomers_and_thermoplastics_Low-r es_protected_March_2010.pdf [retrieved on 2020-12-22]
- Rejitha Rajan: "STUDIES ON PEROXIDE VULCANIZATION OF NATURAL RUBBER Thesis submitted to", , 1 August 2015 (2015-08-01), XP055762349, Retrieved from the Internet: URL:https://dyuthi.cusat.ac.in/xmlui/bitst ream/handle/purl/5233/Dyuthi%20T-2268.pdf? sequence=1 [retrieved on 2020-12-22]

## Beschreibung

Die vorliegende Erfindung betrifft ein Dichtungsprofil aus einer Werkstoffmischung, insbesondere für Fenster- und Türdichtungsprofile, sowie ein Verfahren zur Herstellung des Dichtungsprofils, und ein Verfahren zur Herstellung eines Bauelements, insbesondere für ein Fenster- oder ein Türelement, welches das Dichtungsprofil umfasst.

Bei den Werkstoffen für Dichtungsprofile kommen im Stand der Technik vor allem Elastomer-Werkstoffe zum Einsatz. So werden z.B. Elastomerdichtungsprofile in PVC-Fensterprofile eingezogen und können anschließend verklebt werden. Nachteilig ist, dass die Verklebung einen zusätzlichen Arbeitsgangs und damit höhere Kosten bedingt. Werden die auf Gehrung geschnittenen Dichtungsprofile allerdings nicht verklebt, bildet sich im Laufe der Zeit ein Spalt, in welchen z.B. Regenwasser eindringen kann, da die Dichtungsprofile über ihre Gebrauchszeit schrumpfen. Ein Verschweißen der Elastomer-Dichtungsprofile ist nicht möglich, da diese aufgrund der Vernetzung nicht erweichen (schmelzen) können. Um dieses Problem zu umgehen, wurden in der Vergangenheit vermehrt thermoplastischen Dichtungen (TPE) verwendet, welche untereinander in einem Arbeitsgang mit dem PVC-Fensterprofil verschweißbar sind. Allerdings bringen die thermoplastischen Dichtungen Nachteile hinsichtlich Kosten, Verarbeitbarkeit, Lebensdauer etc. mit sich. Der Wunsch besteht daher seit langer Zeit nach einem Dichtungsprofil aus einem Werkstoff bzw. einer Werkstoffmischung, welches als Elastomer bezeichnet und verarbeitet werden kann bzw. dessen Eigenschaften aufweist, gleichzeitig aber auch verschweißbar ist.

Die Patentanmeldung DE 10 2013 209 608 offenbart ein Dichtungsprofil aus einer Werkstoffmischung, welches über Schwefel und Beschleuniger/Schwefelspender vernetzt wird. Obwohl dieses Dichtungsprofil sowohl Elastomer-Eigenschaften ausbildet als auch verschweißt werden kann, weisen die Elastomer-Eigenschaften dieses Dichtungsprofils bezüglich den Eigenschaften Druckverformungsrest, Reversionsbeständigkeit, und Alterungseigenschaften, Nachteile auf.

Der Druckverformungsrest (DVR) ist ein Maß dafür wie Elastomere sich bei lang anhaltender, konstanter Druckverformung und anschließender Entspannung verhalten. Bei einem DVR von 100% liegt der Körper völlig verformt vor. Ist der DVR zu groß lässt die Presskraft und damit die Dichtwirkung stark nach, sodass Undichtigkeiten auftreten.

Unter Reversion versteht man ein Wiederabfallen des Vernetzungsgrad und mechanischer Werte von Vulkanisaten (wie Zugfestigkeit, Weiterreißfestigkeit, Elastizität) bei einer Fortführung der Vulkanisation über das Optimum hinaus. Eine verbesserte Reversionsbeständigkeit führt dazu, dass die Anwendung höherer Vulkanisationstemperaturen möglich ist ohne die Vulkanisateigenschaften, z.B. den Spannungswert, zu beeinträchtigen.

Auch die Materialalterung führt dazu, dass Dichtungsprofile undicht werden.

Die Patentanmeldung WO 2013/131207 offenbart eine Zusammensetzung aus EPDM und einem Polyolefin-Elastomer, welche über Schwefel oder Metalloxide vernetzt wird.

Die Patentanmeldung EP 0 593 859 offenbart Polymermischungen aus EPDM und Olefin-artigen Polymeren, welche ebenfalls über Schwefel vernetzt werden und für Dachplatten geeignet sind.

Die Patentanmeldung WO 2008/094741 offenbart elastomere Zusammensetzungen aus einer Kautschukkomponente, welche ein oder mehrere Ethylen-Propylen Elastomere und eines oder mehrere Peroxidvulkanisationsmittel umfasst.

Die Veröffentlichung "Suphur and peroxide vulcanisations of rubber compounds - overview" von Ján Kruželác et al. (Chemical Papers 70 (12)) gibt einen Überblick über die Schwefelvulkanisation und die Peroxidvulkanisation von Kautschukkomponenten.

Die Doktorarbeit "Dynamically vulcanized PP/EPDM thermoplastic elastomers" von Kinsuk Naskar (2004) beschäftigt sich mit der peroxidischen Vernetzung von EPDM und Polypropylen.

Die Veröffentlichung von AkzoNobel "Crosslinking elastomers and thermoplastics" offenbart verschiedene Peroxide zur Vernetzung von Elastomeren und Thermoplasten.

Die Doktorarbeit "Studies on peroxide vulcanization of natural rubber" von Rejitha Rajan (2015) ist eine Studie zur Peroxidvulkanisation von natürlichem Kautschuk.

Die Patentanmeldung EP 1 033 386 offenbart die Herstellung von mit Peroxiden vulkanisierten Kautschukmischungen.

Die Patentanmeldung WO 2014/081297 offenbart ein Verfahren zum Herstellen eines elastomeren Produktes mit niedriger Hysterese, wobei das elastomere Material sowie Schwefel und Peroxid gemischt werden.

Es ist daher Aufgabe der vorliegenden Erfindung, ein Dichtungsprofil aus einer Werkstoffmischung, sowie ein Verfahren zu Herstellung eines Bauelements unter Verwendung des Dichtungsprofils bereitzustellen, wobei die gummielastischen Eigenschaften bzw. die Elastomer-Eigenschaften des Dichtungsprofils verbessert sind, ohne die Verschweißbarkeit des Dichtungsprofils zu beeinträchtigen.

Diese Aufgabe wird durch ein Dichtungsprofil gemäß Anspruch 1, sowie ein Verfahren zur Herstellung eines Bauelements gemäß Anspruch 7 gelöst. Weitere Vorteile und Merkmale ergeben sich aus den Unteransprüchen und der Beschreibung.

Erfindungsgemäß weist eine Werkstoffmischung für Dichtungsprofile, insbesondere für Fenster- und Türdichtungsprofile, die folgende Zusammensetzung auf:

| | |
|---|---|
| • EPDM | ca. 5 bis 60 Vol.%, vorzugsweise 10 bis 50 Vol.%, |
| • Copolymer | ca. 8 bis 50 Vol.%, vorzugsweise 15 bis 40 Vol.%, |
| • Füllstoff | ca. 5 bis 70 Vol.%, vorzugsweise 25 bis 40 Vol.% |
| • Weichmacher • Beschleuniger/ | ca. 0 bis 40 Vol.%, vorzugsweise 10 bis 30 Vol% |
| Schwefelspender | ca. 0,1 bis 5 Vol.%, |
| • Schwefel | ca. 0,05 bis 0,5 Vol.%, besonders bevorzugt 0,05 bis < 0,2 Vol.%, |
| • Peroxid | ca. 0,05 bis 4 Vol.%, besonders bevorzugt 0,1 bis 3 Vol.%, |
| • Zinkoxyd | ca. 0 bis 3 Vol.%, vorzugsweise 0,2 bis 2 Vol.%. |

Der Elastomer-Anteil in dieser Werkstoffmischung ist ein Ethylen-Propylen-Dien Kautschuk (EPDM). EPDM weist sehr gute Alterungs-, Witterungs- und UV-Beständigkeit auf, sowie eine gute Rückstellkraft und hervorragendes Temperaturverhalten. Daher eignet sich EPDM besonders für Fenster- und Türdichtungsprofile.

Die Elastomere im Sinne dieser Erfindung sind sowohl durch Schwefel bzw. Beschleuniger/Schwefelspender als auch durch Peroxid vernetzbar.

Gemäß der Erfindung handelt es sich beim Copolymer um ein Ethylen Propylen Kautschuk (EPM), ein Ethylene-Octen-Copolymer, ein Ethylen-Buten-Copolymer oder ein Propylen-Ethylen Copolymer (ein Thermoplast oder ein thermoplastischen Elastomer (TPE)). Diese sind im Gegensatz zu den Elastomeren schmelzbar. Das Copolymer ist in der Werkstoffmischung der vorliegenden Erfindung zweckmäßigerweise nicht durch Schwefel und/oder Beschleuniger/Schwefelspender vernetzbar, und weist auch keine Anbindungsstellen und/oder Verzweigungsstellen für die Schwefelvernetzer auf. Beispielsweise kann EPM (welches keine Doppelbindungen enthält) nicht mit Schwefel bzw. Schwefel-Beschleunigersystemen vernetzt werden, sondern nur mit Hilfe von Peroxiden.

Gemäß der Erfindung ist das Copolymer ausgewählt aus der Gruppe bestehend aus Ethylene-Octen-Copolymer, Ethylen-Buten-Copolymer oder Propylen-Ethylen Copolymer. Beispielsweise kann ein Copolymer vom Typ Versify™ 2300 der Fa. Dow Chemical Company verwendet werden. Es versteht sich, dass auch mit anderen Copolymeren bzw. Copolymergemischen die genannten Vorteile erzielt werden können, so dass das Copolymer nicht auf diese Beispiele beschränkt ist.

In einer bevorzugten Ausführungsform ist das Elastomer EPDM und das Copolymer EPM. Die Eigenschaften dieser Mischung ist gute Elastizität und Festigkeit, wobei die Mischung gleichzeitig kältebeständig, abriebfest, sowie alterungs-, ozon- und witterungsbeständig ist.

Die Werkstoffmischung ist weiter dadurch gekennzeichnet, dass die Werkstoffmischung Füllstoff aufweist, und dass der Füllgrad im Vergleich zu TPE/TPV höher sein kann. Mögliche Füllstoffe sind beispielsweise Ruße, Kohlenstofffasern, mineralische Füllstoffe wie Calciumcarbonat oder Talkum, Glasfasern etc. oder auch Mischungen der genannten Materialien. Zweckmäßigerweise wirkt der Füllstoff verstärkend (zum Erreichen ausreichender mechanischer Eigenschaften), während der Elastomer-Anteil die Festigkeit und die Elastizität bewirkt. Der Füllgrad der Füllstoffe liegt bevorzugt in einem Bereich von etwa 5 bis 70%, bevorzugt bei etwa 30 bis 40%.

Die Werkstoffmischung ist dadurch gekennzeichnet, dass sie eine Kombination von Vernetzern, d.h. Schwefel und Beschleuniger/Schwefelspender und Peroxid enthält.

Gemäß der Erfindung enthält die Werkstoffmischung eine Vernetzer-Kombination aus Schwefel, Beschleuniger/Schwefelspender und Peroxid. Obwohl die Schwefelvernetzung als auch die Peroxidvernetzung aus der Literatur bekannt sind (siehe beispielsweise WO 2008/094741) sind keine Hybrid-Kombinationen von Vernetzern für Dichtungen bekannt. Bei reinen Schwefel- oder Peroxidvernetzungen hängt der Vernetzungsgrad bzw. die Vernetzungsdichte von der Art und Menge des gewählten Vernetzungssystems ab. Die Vernetzungsdichte hat dabei einen entscheidenden Einfluß auf die Werkstoffeigenschaften des Dichtungsprofils, wie beispielsweise Ermüdung, Härte, Zugfestigkeit, bleibende Verformung, sowie Reibung und Reißdehnung. Die Vernetzungsdichte sollte so gewählt werden, dass das erfindungsgemäße Dichtungsprofil die gewünschten Eigenschaften aufweist. Die Vernetzung der oben genannten Werkstoffmischung erfolgt mit einer Hybrid-Kombination aus Peroxid und Schwefel bzw. Beschleuniger/Schwefelbeschleuniger und zwar bevorzugt nach der Formgebung. Insbesondere beträgt der Anteil des Vernetzers Peroxid in einer Hybrid-Kombination Schwefel/Peroxid in Bezug auf das Verhältnis Schwefel/Peroxid in der Werkstoffmischung zwischen 1 bis 95%, vorzugsweise 2 bis 50%, besonders bevorzugt 5 bis 20% und idealerweise 15%. Die Vernetzung erfolgt mit Vorteil bei einer Temperatur in einem Bereich von etwa 150-250°C. Zur Vernetzung können Standardverfahren aus der Elastomerverarbeitung eingesetzt werden, z.B. Vulkanisation im Salzbad bei 210°C.

Durch Hybridkombinationen aus Peroxid und Schwefel und Beschleuniger/Schwefelspender können gegenüber einer reinen Schwefel- oder Peroxidvernetzung folgende Eigenschaften verbessert werden: Elimination oder signifikante Reduktion der Umkehrung der Vulkanisation bei hohen Temperaturen, gleiche oder verbesserte physikalische Eigenschaften, erhöhte Alterungsbeständigkeit, insbesondere die Retention der Bruchdehnung, sowie verbesserter Druckverformung.

Als Weichmacher können paraffinische Mineralöle, naphtenbasierende oder aromatische Öle oder auch synthetische Öle, wie 1,2-Cyclohexandicarbonsäurediisononylester, eingesetzt werden.

Optional kann die Werkstoffmischung auch Zinkoxyd enthalten. Die Zugabe von Zinkoxyd kann das Schwefelvernetzungssystem aktivieren und die Wärmestabilität der Werkstoffmischung verbessern.

Ein derartiges Dichtungsprofil kommt bevorzugt im Bereich Fenster, Türen, Fassaden und Tore zum Einsatz. Ebenfalls werden derartige Dichtungsprofile bei der sogenannten nachgeschalteten Rahmenfertigung von Dichtungsprofilen verwendet, d.h. Dichtungsprofile werden z.B. auf Gehrung geschnitten und verschweißt.

Erfindungsgemäß wird ein Dichtungsprofil, insbesondere für Fenster- und Türdichtungen, aus einer Werkstoffmischung hergestellt durch die folgenden Schritte:
- Mischen der Werkstoffmischung
- Formen der Werkstoffmischung;
- Vernetzen der Werkstoffmischung.

Vorzugsweise kann auch ein mehrstufiges Mischverfahren eingesetzt werden. Dabei werden der EPDM-Anteil und der Copolymer-Anteil in einem ersten Schritt vermischt, vorzugweise in einem Verhältnis von EPDM zu Copolymer von 2:1, sodass ein erstes Gemisch entsteht. Danach erfolgt das Mischen des ersten Gemischs mit Füllstoffen, Weichmachern und Zinkoxyd zu einem zweiten Gemisch. In einem weiteren Schritt wird das zweite Gemisch mit Beschleuniger/Schwefelspender und Schwefel und Peroxid gemischt, so dass ein drittes Gemisch entsteht. Vorzugsweise ist das Verhältnis von EPDM/Copolymer, d.h. der ersten Mischung, zu den restlichen Bestandteilen der Werkstoffmischung 1:1, vorzugsweise 1:2. Die Werkstoffmischung weist damit im dritten Gemisch einen Zustand auf, in welchem sowohl der EPDM-Anteil als auch der Copolymer-Anteil unvernetzt sind. Danach ist die Werkstoffmischung dann verformbar und/oder kann verformt werden. Die Vernetzung erfolgt erst nach der Formgebung, bevorzugt unter Wärmeeinwirkung. Mit Vorteil ist die Werkstoffmischung vernetzt und weist unvernetzte Bereiche oder auch Segmente auf und ist somit schweißbar. Das Copolymer wird in diesem Verfahren nicht bzw. nur zu einem geringen Ausmaß vernetzt und kann daher beim Erhitzen/Schweißen aufschmelzen. Da der EPDM-Anteil vernetzt vorliegt, kommt es dabei zu keiner signifikanten Verformung (Schweißraupe). An der Kontaktstelle kann sich die Schmelze von z.B. zwei aneinander geschweißten Dichtungsprofilen vermischen, so dass eine feste Verbindung entsteht. Mit anderen Worten weist die Werkstoffmischung nach der Vernetzung EPDM-Anteile auf, welche vernetzt sind, und Copolymer-Anteile, welche nicht vernetzt sind. Dabei werden durch die vernetzten Bereiche die Elastomer-Eigenschaften bestimmt. Bei der Werkstoffmischung handelt es sich nicht um ein thermoplastisches Polymer (TPE), da die Werkstoffmischung nicht mehr durch Hitzeeinwirkung verformt werden kann.

Die Werkstoffmischung ist damit auch kein klassischer thermoplastischer Elastomer (TPE) wie beispielsweise PP/EPDM (Propylen/Ethylen-Propylen-DienKautschuk oder auch TPV genannt). Hierbei, also z.B. bei TPV, handelt es sich um Werkstoffe, bei welchen elastische Polymerketten (vernetztes EPDM) in thermoplastischem Material (PP) eingebunden (dispergiert) sind. Sie lassen sich in einem rein physikalischen Prozess in Kombination mit Wärmeeinwirkung und anschließenden Abkühlung verarbeiten. D.h. nach der Formgebung findet keine chemische Vernetzung durch Wärmeeinwirkung statt. Ein derartiger Werkstoff kann vermahlen und wiederverarbeitet werden. Bei der Herstellung wird bei einem TPE das Material extrudiert und die Formstabilität entsteht durch Abkühlen des Materials.
Die Werkstoffmischung wird nach der Formgebung (Extrusion) nicht abgekühlt, sondern durch Erhitzung vernetzt. Vorteilhafterweise bleibt die Werkstoffmischung bei höheren Temperaturen formstabil, während z.B. ein TPE aus PP/EPDM bei denselben Temperaturen aufschmilzt und umgeformt werden kann. Die Werkstoffmischung weist kein thermoplastisches Verhalten auf, da sie durch Hitzeeinwirkung nicht mehr verformt werden kann.

Bei der Werkstoffmischung handelt es sich in der Mischung um ein unvernetztes EDPM (Elastomer-Anteil) und ein Copolymer. Die Vernetzung erfolgt nach der Formgebung, zweckmäßigerweise durch die Einwirkung von Temperatur (ähnlich wie bei Elastomeren). Vorteilhafterweise schmilzt die Werkstoffmischung unter Wärmeeinwirkung nicht wie ein Thermoplast auf, ist aber trotzdem schweißbar. Dadurch können identische Verarbeitungsverfahren wie bei gewöhnlichen Elastomerprodukten verwendet werden, was eine Herstellung von Koextrudaten dieses verschweißbaren Werkstoffes mit Elastomerprodukten ermöglicht. Vorteilhafterweise ist der Elastomer-Anteil während des Mischvorgangs und des Formvorgangs unvernetzt.

Zweckmäßigerweise ist die Werkstoffmischung dadurch gekennzeichnet, dass die Werkstoffmischung nach der Vernetzung mit sich selbst und/oder mit einem Elastomerwerkstoff verschweißbar und/oder verschweißt ist. Der große Vorteil liegt darin, dass die Werkstoffmischung nach der Vernetzung sozusagen ein chemisch vernetztes Elastomer darstellt, welches verschweißbar ist. Ausmaß der Elastizität und Festigkeit der Verschweißung können vorteilhafterweise über das Verhältnis von Elastomer-Anteil zu dem Copolymer-Anteil eingestellt werden. Die Werkstoffmischung kann beispielsweise in einem Arbeitsgang bei der Fertigung eines Fenster- oder Türrahmens verschweißt werden. In der Regel werden auf Gehrung geschnittene PVC Fenster- oder Türrahmen mittels eines Schweißspiegels verschweißt. Vorteilhafterweise können nun bei der gleichen Temperatur und in dem gleichem Arbeitsgang, bei welchem die Fenster- oder Türrahmen verbunden/verschweißt werden, die in die Fenster- oder Türrahmen eingezogenen Dichtungsprofile, welche aus der Werkstoffmischung gefertigt sind, ebenfalls untereinander verschweißt werden.

Vorteilhafterweise ist die Werkstoffmischung dadurch gekennzeichnet, dass die Werkstoffmischung bei einer Temperatur von etwa 150° bis 300° C verschweißbar ist. Besonders bevorzugt erfolgt die Verschweißung bei einer Temperatur von etwa 180 bis 260°C. Mit Vorteil kann dadurch eine Verschweißung der Werkstoffmischung in einem Arbeitsgang mit der Verschweißung eines Fensterrahmens, beispielsweise aus PVC, erfolgen.

Vorzugsweise ist die Werkstoffmischung dadurch gekennzeichnet, dass das Copolymer mit Vorteil unvernetzte Segmente oder Bereiche, welche die Schweißbarkeit ermöglicht bzw. ausbildet. Zweckmäßigerweise können die durch das Copolymer gebildeten Segmente oder Bereiche beim Erhitzen aufschmelzen.

Gemischt wird zweckmäßigerweise in einem Innenmischer bis etwa 150°C, bevorzugt mit mehreren Mischstufen. Wichtig ist, dass beim Zumischen der Vernetzer die Temperatur nicht zu hoch werden darf, da sonst die Vernetzung der Werkstoffmischung bereits im Mischer beginnen würde. Die Vernetzung erfolgt jedoch erst nach der Formgebung unter Temperatureinwirkung.

Erfindungsgemäß ist ein Bauelement, insbesondere ein Fenster- oder ein Türelement, vorgesehen, welches ein Dichtungsprofil umfasst, welches aus dem erfindungsgemäßen Dichtungsprofil gefertigt ist, wobei zwei Bauteile des Bauelements (z. B. Rahmenprofile) und die entsprechenden Dichtungsprofile in einem gleichen Arbeitsgang verbindbar sind. Bevorzugt erfolgt die Verbindung durch eine stoffschlüssige Verbindung, beispielsweise durch eine Verschweißung mit einem Schweißspiegel. Zweckmäßigerweise ist das Material des Bauteils z. B. PVC. Damit sind mit Vorteil in einem Arbeitsgang zumindest zwei Bauteile und ihre (darin z. B. eingelegten) Dichtungsprofile jeweils miteinander verschweißbar, d. h. die beiden Bauteile untereinander und die beiden Dichtungsprofile untereinander.

Erfindungsgemäß ist ein Verfahren vorgesehen, umfassend die Schritte:
- Bereitstellen von zumindest zwei Bauteilen, beispielsweise Fenster- oder Türrahmen(-profilen);
- Bereitstellen zumindest zweier Dichtungsprofile aus der Werkstoffmischung;
- Einziehen der Dichtungsprofile in die entsprechenden Bauteile;
- Verschweißen der Bauteile und der Dichtungsprofile untereinander in einem Arbeitsgang.

## Patentansprüche

1. Dichtungsprofil, insbesondere für Fenster- und Türdichtungsprofile, aus einer Werkstoffmischung, welche die folgende Zusammensetzung aufweist:
5 bis 60 Vol.% EPDM
8 bis 50 Vol.% Copolymer
5 bis 70 Vol.% Füllstoff
0 bis 40 Vol.% Weichmacher
0,1 bis 5 Vol.% Beschleuniger/Schwefelspender
0,05 bis 5 Vol.% Schwefel
0,05 bis 5 Vol.% Peroxid
0 bis 3 Vol.% Zinkoxyd,
wobei das Copolymer ein Thermoplast oder ein thermoplastisches Elastomer umfassend ein Propylen-Ethylen Copolymer, ein Ethylen-Buten Copolymer, ein Ethylen-Octen Copolymer oder ein Ethylen-Propylen Copolymer ist, und wobei das Copolymer nicht schwefelvernetzbar ist.

2. Dichtungsprofil nach Anspruch 1,
wobei das Verhältnis zwischen EPDM und Copolymer in der Werkstoffmischung 2:1 beträgt.

3. Dichtungsprofil nach einem der vorhergehenden Ansprüche, wobei das EPDM sowohl durch Schwefel und/oder Beschleuniger/Schwefelspender als auch durch Peroxid vernetzbar ist.

4. Dichtungsprofil nach einem der vorhergehenden Ansprüche,
wobei das Copolymer durch Peroxide vernetzbar ist.

5. Dichtungsprofil nach einem der vorhergehenden Ansprüche, wobei der Anteil an Peroxid in Bezug auf das Verhältnis Schwefel/Peroxid in der Werkstoffmischung zwischen 1 bis 95%, vorzugsweise 2 bis 50%, besonders bevorzugt 5 bis 20% und idealerweise 15% beträgt.

6. Dichtungsprofil nach einem der vorhergehenden Ansprüche,
**dadurch gekennzeichnet,**
**dass** die Werkstoffmischung bei einer Temperatur von etwa 150° bis 300°C, bevorzugt bei etwa 180 bis 260°C, verschweißbar ist.

7. Verfahren zur Herstellung eines Bauelements, insbesondere ein Tür- oder ein Fensterelement, welches die folgenden Schritte umfasst:
- Bereitstellen von zumindest zwei Bauteilen, beispielsweise Fenster- oder Türprofilen;
- Bereitstellen zumindest zweier Dichtungsprofile nach einem der vorhergehenden Ansprüche, wobei die Werkstoffmischung gemischt, geformt und anschließend unter Wärmeeinwirkung vernetzt wurde;
- Einziehen der Dichtungsprofile in die entsprechenden Bauteile;
- Verschweißen der Bauteile und der Dichtungsprofile untereinander in einem Arbeitsgang.

8. Verfahren nach Anspruch 7, wobei die Bauteile und die Dichtungsprofil bei einer Temperatur von etwa 150° bis 300°C, bevorzugt bei etwa 180 bis 260°C, verschweißt werden.

## Claims

1. Sealing profile, in particular for window and door sealing profiles,
made of a material mixture which has the following composition:
5 to 60 vol% EPDM
8 to 50 vol% copolymer
5 to 70 vol% filler
0 to 40 vol% plasticiser
0.1 to 5 vol% accelerator/sulphur donor
0.05 to 5 vol% sulphur
0.05 to 5 vol% peroxide
0 to 3 vol% zinc oxide,
wherein the copolymer is a thermoplastic or a thermoplastic elastomer comprising a propylene-ethylene copolymer, an ethylene-butene copolymer, an ethylene-octene copolymer or an ethylene-propylene copolymer, and wherein the copolymer is not sulfur crosslinkable.

2. Sealing profile according to claim 1,
wherein the ratio between EPDM and copolymer in the material mixture is 2:1.

3. A sealing profile according to any one of the preceding claims, wherein the EPDM is crosslinkable by sulphur and/or accelerator/sulphur donor as well as peroxide.

4. A sealing profile according to any one of the preceding claims,
wherein the copolymer is crosslinkable by peroxides.

5. A sealing profile according to any one of the preceding claims, wherein the proportion of peroxide with respect to the ratio of sulphur/peroxide in the material mixture is between 1 and 95%, preferably 2 to 50%, more preferably 5 to 20% and ideally 15%.

6. Sealing profile according to one of the preceding claims,
**characterized in that** the material mixture is weldable at a temperature of about 150° to 300°C, preferably at about 180 to 260°C.

7. Method for manufacturing a structural element, in particular a door or window element, comprising the following steps:
- Providing at least two components, for example window or door profiles;
- providing at least two sealing profiles according to one of the preceding claims, wherein the material mixture has been mixed, shaped and subsequently cross-linked under the influence of heat;
- Inserting the sealing profiles into the corresponding components;
- welding the components and the sealing profiles to one another in a single work process.

8. The method of claim 7, wherein the components and the sealing profile are welded at a temperature of about 150° to 300°C, preferably about 180 to 260°C.

## Revendications

1. Profilé d'étanchéité, en particulier pour des profilés d'étanchéité de fenêtres et de portes, constitué d'un mélange de matériaux présentant la composition suivante :
5 à 60 % en volume d'EPDM,
8 à 50 % en volume de copolymère,
5 à 70 % en volume de matière de charge,
0 à 40 % en volume de plastifiant,
0,1 à 5 % en volume d'un accélérateur/fournisseur de soufre,
0,05 à 5 % en volume de soufre,
0,05 à 5 % en volume de peroxyde,
0 à 3 % en volume d'oxyde de zinc,
le copolymère étant un thermoplastique ou un élastomère thermoplastique, comprenant un copolymère de propylène-éthylène, un copolymère éthylènebutène, un copolymère éthylène-octène, ou un copolymère éthylène-propylène, et le copolymère n'est pas réticulable au soufre.

2. Profilé d'étanchéité selon la revendication 1, dans lequel le rapport entre l'EPDM et le copolymère dans le mélange de matériaux est de 2:1.

3. Profilé d'étanchéité selon l'une des revendications précédentes, dans lequel l'EPDM est réticulable aussi bien au soufre et/ou à l'accélérateur/fournisseur de soufre qu'au peroxyde.

4. Profilé d'étanchéité selon l'une des revendications précédentes, dans lequel le copolymère est réticulable aux peroxydes.

5. Profilé d'étanchéité selon l'une des revendications précédentes, dans lequel la part de peroxyde par rapport à la proportion soufre/peroxyde dans le mélange de matériaux est comprise entre 1 à 95 %, de préférence 2 à 50 %, de manière particulièrement préférée 5 à 20 % et est idéalement de 15 %.

6. Profilé d'étanchéité selon l'une des revendications précédentes, **caractérisé en ce que** le mélange de matériaux est soudable à une température d'environ 150° à 300 °C, en particulier d'environ 180 à 260 °C.

7. Procédé de réalisation d'un élément de construction, en particulier d'un élément de porte ou de fenêtre, comprenant les étapes suivantes consistant à :
- fournir au moins deux éléments de construction, par exemple des profilés de fenêtre ou de porte ;
- fournir au moins deux profilés d'étanchéité selon l'une des revendications précédentes, le mélange de matériaux ayant été mélangé, mis en forme et ensuite réticulé sous l'effet de chaleur ;
- intégrer les profilés d'étanchéité dans les éléments de construction correspondants ;
- souder les éléments de construction et les profilés d'étanchéité entre eux en une seule passe.

8. Procédé selon la revendication 7, dans lequel les éléments de construction et les profilés d'étanchéité sont soudés à une température d'environ 150° à 300 °C, de préférence d'environ 180 à 260 °C.
